# EUROPEAN PATENT APPLICATION

(11) **EP 4 391 717 A1**
(43) Date of publication of application: **26.06.2024**
(21) Application number: 23214181.2
(22) Date of filing: 05.12.2023
(51) Int. Cl.: H05B 1/02, H05B 6/06

(54) **COOKING APPLIANCE AND METHOD FOR OPERATING THE SAME**

(30) Priority: 22.12.2022 KR 20220182123
(71) Applicant: LG Electronics Inc., Yeongdeungpo-gu Seoul 07336 (KR)
(72) Inventor: OK, Seungbok, Seoul 08592 (KR); JEON, Seonho, Seoul 08592 (KR); CHO, Chuhyoung, Seoul 08592 (KR)
(74) Representative: Vossius & Partner Patentanwälte Rechtsanwälte mbB

(57) **Abstract**

Provided is a cooking appliance. The cooking appliance includes a first temperature sensor, a second temperature sensor, an analog switch configured to acquire one of a sensing value of the first temperature sensor and a sensing value of the second temperature sensor, and a processor configured to predict a temperature by applying the sensing value acquired through the analog switch to a temperature prediction function.

## Description

### CROSS-REFERENCE TO RELATED APPLICATIONS

The present application claims priority to Korean Patent Application No. 10-2022-0182123 (filed on December 22, 2022).

### BACKGROUND

The present disclosure relates to a cooking appliance and operating method thereof. More specifically, the present disclosure relates to a cooking appliance that heats food using an induction heating method, and a method for operating the same.

Various types of cooking equipment are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined size is applied to the coil, the induction heating method generates an eddy current in the object to be heated consisting of a metal component using a magnetic field generated around the coil to heat the object to be heated itself.

Recently, most of the induction heating methods are applied to cooking appliances.

In the case of such an induction heating-type cooking appliance, magnetic fields are not uniformly distributed, and thus, there may be an area on which the magnetic fields are strongly concentrated and an area on which the magnetic fields are weakly reached on an upper plate on which the object to be heated is disposed. Thus, before the cooking appliance performs a sufficient heating operation, the temperature distribution of the object to be heated may also be non-uniform.

Therefore, when estimating a temperature of a cooking appliance based on a temperature of one area of an upper plate, accuracy may be deteriorated, and thus, a method for accurately measuring the temperature of the cooking appliance is required. Thus, a plurality of temperature sensors may be provided to sense temperatures of various areas of the upper plate, but if a plurality of A/D ports are provided to acquire sensing values from the plurality of temperature sensors, the cost may increase, and the number of temperature sensors may be limited.

Thus, a method for providing an analog switch to acquire the sensing values of the plurality of temperature sensors using only one A/D port may be devised. In this case, due to non-linear characteristics of a resistance value of the temperature sensor, there is a limitation in that the accuracy is deteriorated when measuring the temperature in a wide range.

### SUMMARY

Embodiments provide a cooking appliance which minimizes an increase in manufacturing cost when provided with a plurality of temperature sensors to sense temperatures on various areas in one heating zone (burner) and solves a limitation of limiting the number of provided temperature sensors.

Embodiments also provide a cooking appliance capable of acquiring sensing values of a plurality of temperature sensors using only one A/D port when the plurality of temperature sensors are provided.

Embodiments also provide an algorithm that receives multiple inputs from temperature sensors having non-linear resistance value characteristics, enables a single output, and allows multiple temperature information to be sensed independently over a wide temperature range.

In one embodiment, a cooking appliance includes: a first temperature sensor; a second temperature sensor; an analog switch configured to acquire one of a sensing value of the first temperature sensor and a sensing value of the second temperature sensor; and a processor configured to predict a temperature by applying the sensing value acquired through the analog switch to a temperature prediction function.

The processor may be configured to determine the temperature prediction function based on a previously predicted temperature.

The processor may be configured to: determine the temperature prediction function to which the sensing value of the first temperature sensor is to be applied based on the temperature previously predicted by the first temperature sensor; and determine the temperature prediction function to which the sensing value of the second temperature sensor is to be applied based on the temperature previously predicted by the second temperature sensor.

The processor may be configured to: determine the temperature prediction function as a first temperature prediction function when the previously predicted temperature is greater than a preset first level; and determine the temperature prediction function as a second temperature prediction function when the previously predicted temperature is less than the preset second level.

The first level and the second level may be the same.

When the first level and the second level are different from each other, the processor may be configured to maintain the previously determined temperature prediction function when the previously predicted temperature is between the first level and the second level.

The processor may be configured to control the analog switch so as to alternatively acquire the sensing value of the first temperature sensor and the sensing value of the second temperature sensor for each preset period.

The first temperature sensor may include a main temperature sensor, and the second temperature sensor may include a sub temperature sensor.

In another embodiment, a method for operating a cooking appliance includes: acquiring one of a sensing value of a first temperature sensor and a sensing value of a second temperature sensor; determining each of a temperature prediction function, to which the sensing value of the first temperature sensor is applied, and a temperature prediction function, to which the sensing value of the second temperature sensor is applied; and applying the acquired sensing value to the determined temperature prediction function to predict a temperature.

The details of one or more embodiments are set forth in the accompanying drawings and the description below. Other features will be apparent from the description and drawings, and from the claims.

### BRIEF DESCRIPTION OF THE DRAWINGS

FIG. 1 is a perspective view illustrating a cooking appliance and a cooking container according to an embodiment of the present disclosure.
FIG. 2 is a cross-sectional view illustrating the cooking appliance and the cooking container according to an embodiment of the present disclosure.
FIG. 3 is a circuit diagram of the cooktop according to an embodiment of the present disclosure.
FIG. 4 is a view illustrating output characteristics of the cooktop according to an embodiment of the present disclosure.
FIG. 5 is a view illustrating a current density of a bottom of the cooking container that is being heated by the cooking appliance according to an embodiment of the present disclosure.
FIG. 6 is a view illustrating the sensor supporter, on which the main temperature sensor and the sub temperature sensor are mounted, and the working coil of the cooking appliance according to an embodiment of the present disclosure.
FIG. 7 is a cross-sectional view of the sensor supporter and the working coil according to an embodiment of the present disclosure.
FIG. 8 is a view illustrating a space in which a plurality of sub temperature sensors are disposed according to an embodiment of the present disclosure.
FIG. 9 is a view illustrating a state in which the plurality of sub temperature sensors are disposed in the space illustrated in FIG. 8.
FIG. 10 is a view for explaining resistance value characteristics of a thermistor according to an embodiment of the present disclosure.
FIG. 11 is a circuit diagram illustrating a plurality of temperature sensors and an analog switch of the cooking appliance according to an embodiment of the present disclosure.
FIG. 12 is a control block diagram of the cooking appliance according to an embodiment of the present disclosure.
FIG. 13 is a view illustrating a temperature prediction function used in the cooking appliance according to an embodiment of the present disclosure.
FIG. 14 is a flowchart illustrating an operating method of the cooking appliance according to an embodiment of the present disclosure.
FIG. 15 is a table for explaining a method for determining the temperature prediction function through the cooking appliance according to an embodiment of the present disclosure.
FIG. 16 is a flowchart of a method for determining the temperature prediction function according to an embodiment of the present disclosure.
FIG. 17 is a view illustrating a first example for explaining the method for determining the temperature prediction function for each temperature sensor through the cooking appliance according to an embodiment of the present disclosure.
FIG. 18 is a view illustrating a second example for explaining the method for determining the temperature prediction function for each temperature sensor through the cooking appliance according to an embodiment of the present disclosure.
FIG. 19 is a view illustrating a third example for explaining the method for determining the temperature prediction function for each temperature sensor through the cooking appliance according to an embodiment of the present disclosure.
FIG. 20 is a view illustrating a fourth example for explaining the method for determining the temperature prediction function for each temperature sensor through the cooking appliance according to an embodiment of the present disclosure.

### DETAILED DESCRIPTION OF THE EMBODIMENTS

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, a cooking appliance and operating method thereof according to an embodiment of the present disclosure will be described. Hereinafter, "cooking appliance" may mean an induction heating type cooktop, but is not limited thereto.

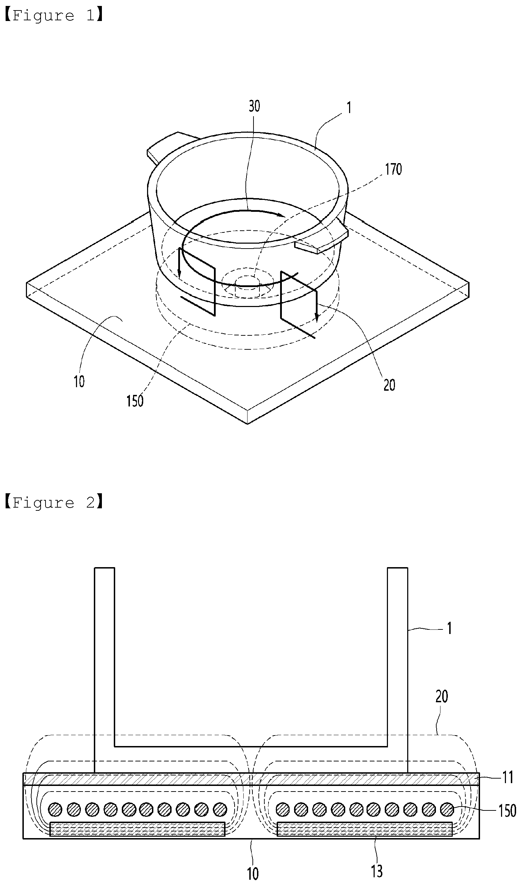

FIG. 1 is a perspective view illustrating a cooking appliance and a cooking container according to an embodiment of the present disclosure, and FIG. 2 is a cross-sectional view illustrating the cooking appliance and the cooking container according to an embodiment of the present disclosure.

A cooking container 1 may be disposed above the cooking appliance 10, and the cooking appliance 10 may heat a cooking container 1 disposed thereon.

First, a method for heating the cooking container 1 using the cooking appliance 10 will be described.

As illustrated in FIG. 1, the cooking appliance 10 may generate a magnetic field 20 so that at least a portion of the magnetic field 20 passes through the cooking container 1. Here, if an electrical resistance component is contained in a material of the cooking container 1, the magnetic field 20 may induce an eddy current 30 in the cooking container 1. Since the eddy current 30 generates heat in the cooking container 1 itself, and the heat is conducted or radiated up to the inside of the cooking container 1, contents of the cooking container 1 may be cooked.

When the material of the cooking container 1 does not contain the electrical resistance component, the eddy current 30 does not occur. Thus, in this case, the cooking appliance 10 may not heat the cooking container 1.

As a result, the cooking container 1 capable of being heated by the cooking appliance 10 may be a stainless steel vessel or a metal vessel such as an enamel or cast iron vessel.

Next, a method for generating the magnetic field 20 by the cooking appliance 10 will be described.

As illustrated in FIG. 2, the cooking appliance 10 may include at least one of an upper plate glass 11, a working coil 12, or a ferrite 13.

The upper plate glass 11 may support the cooking container 1. That is, the cooking container 1 may be placed on a top surface of the upper plate glass 11. A heating area in which the cooking container 1 is heated may be formed on the upper plate 11.

In addition, the upper plate glass 11 may be made of ceramic tempered glass obtained by synthesizing various mineral materials. Thus, the upper plate glass 11 may protect the cooking appliance 10 from an external impact.

In addition, the upper plate glass 11 may prevent foreign substances such as dust from being introduced into the cooking appliance 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooking appliance 10.

When the current flows through the working coil 12, the magnetic field 20 may be generated, and the magnetic field 20 may generate the eddy current 30 by meeting the electrical resistance component contained in the cooking container 1. The eddy current may heat the cooking container 1, and thus, the contents of the cooking container 1 may be cooked.

In addition, heating power of the cooking appliance 10 may be adjusted according to an amount of current flowing through the working coil 12. As a specific example, as the current flowing through the working coil 12 increases, the magnetic field 20 may be generated more, and thus, since the magnetic field passing through the cooking container 1 increases, the heating power of the cooking appliance 10 may increase.

The ferrite 13 is a component for protecting an internal circuit of the cooking appliance 10. Specifically, the ferrite 13 serves as a shield to block an influence of the magnetic field 20 generated from the working coil 12 or an electromagnetic field generated from the outside on the internal circuit of the cooking appliance 10.

For this, the ferrite 13 may be made of a material having very high permeability. The ferrite 13 serves to induce the magnetic field introduced into the cooking appliance 10 to flow through the ferrite 13 without being radiated. The movement of the magnetic field 20 generated in the working coil 12 by the ferrite 13 may be as illustrated in FIG. 2.

The cooking appliance 10 may further include components other than the upper glass 11, the working coil 12, and the ferrite 13 described above. For example, the cooking appliance 10 may further include an insulator (not shown) disposed between the upper plate glass 11 and the working coil 12. That is, the cooking appliance according to the present disclosure is not limited to the cooking appliance 10 illustrated in FIG. 2.

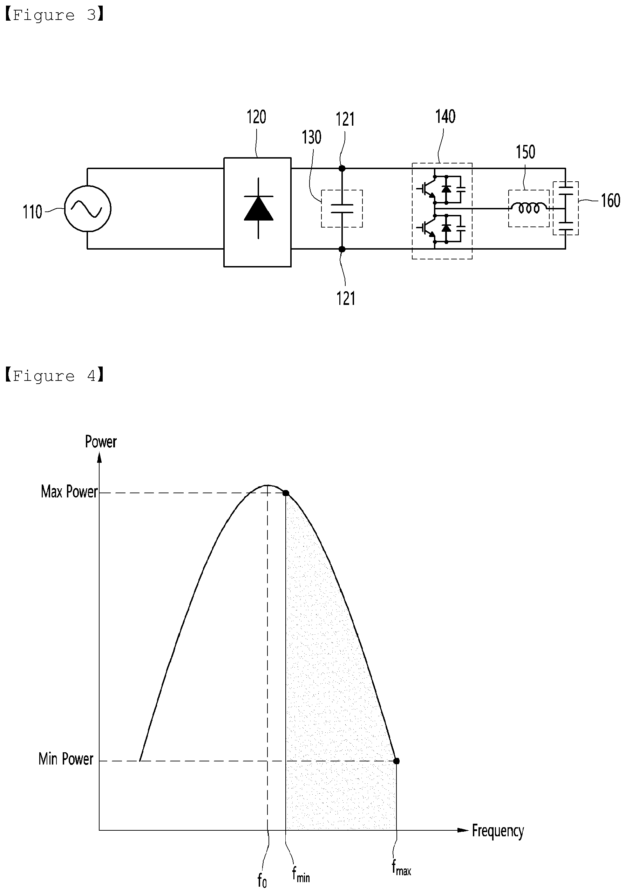

FIG. FIG. 3 is a circuit diagram of the cooktop according to an embodiment of the present disclosure.

Since the circuit diagram of the cooking appliance 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that high-frequency current flows through the working coil 150. The inverter 140 drives the switching element constituted by insulated gate bipolar transistors (IGBTs) to allow high-frequency current to flow through the working coil 150, and thus, a high-frequency magnetic field is generated in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooking appliance 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooking appliance 10 according to a frequency band.

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooking appliance 10, the Q factor is determined by the inductance value of the working coil 150 included in the cooking appliance 10 and the capacitance value of the resonant capacitor 160. The resonance curve may be different depending on the Q factor. Thus, the cooking appliance 10 has different output characteristics according to the inductance value of the working coil 150 and the capacitance value of the resonant capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooking appliance 10 uses a frequency in a right region based on the resonance frequency f0 of the resonance curve. In addition, the cooking appliance 1 may have a minimum operating frequency and a maximum operating frequency, which are set in advance.

For example, the cooking appliance 10 may operate at a frequency corresponding to a range from the maximum operating frequency fmax to the minimum operating frequency fmin. That is, the operating frequency range of the cooking appliance 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooking appliance 10 does not operate at an audible frequency (about 16 Hz to 20 kHz), noise of the cooking appliance 10 may be reduced.

Since setting values of the above-described maximum operating frequency fmax and minimum operating frequency fmin are only examples, the embodiment of the present disclosure is not limited thereto.

When receiving a heating command, the cooking appliance 10 may determine an operating frequency according to a heating power level set by the heating command. Specifically, the cooking appliance 10 may adjust the output power by decreasing in operating frequency as the set heating power level is higher and increasing in operating frequency as the set heating power level is lower. That is, when receiving the heating command, the cooking appliance 10 may perform a heating mode in which the cooking appliance operates in one of the operating frequency ranges according to the set heating power.

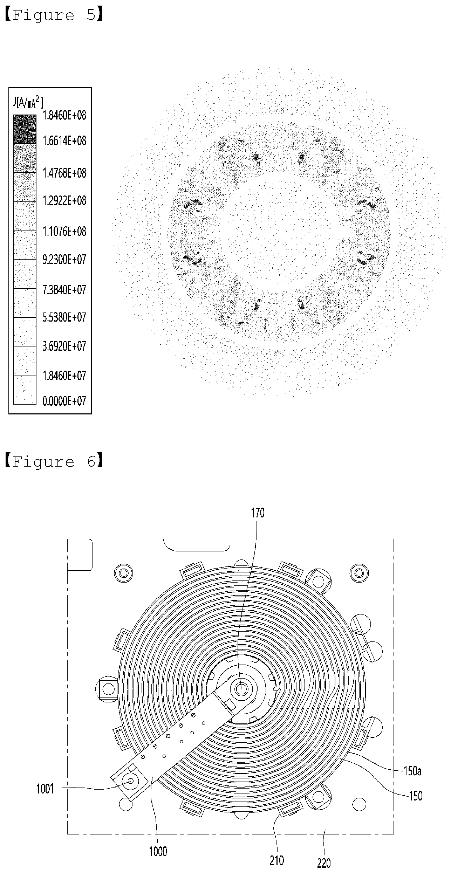

FIG. 5 is a view illustrating a current density of a bottom of the cooking container that is being heated by the cooking appliance according to an embodiment of the present disclosure.

Referring to Figure 5, it can be seen that the current density of the bottom surface of the cooking vessel 1 is formed non-uniformly. Specifically, it is seen that the current density is low in a center area and an outer circumferential area of the bottom surface of the cooking container 1, while a high current density is formed in an area therebetween, i.e., between the center area and the outer circumferential area.

Thus, when the cooking appliance is provided with only one temperature sensor, it takes a long time for heat to be transferred from another area to the area where the temperature sensor is disposed, which has a disadvantage of deteriorating accuracy of the temperature sensing and slow a response speed.

Thus, the cooking appliance according to an embodiment of the present disclosure is intended to be provided with the plurality of temperature sensors to be able to sense temperatures of various areas of one heating zone.

For example, the plurality of temperature sensors may include a main temperature sensor and a sub temperature sensor.

FIG. 6 is a view illustrating the sensor supporter, on which the main temperature sensor and the sub temperature sensor are mounted, and the working coil of the cooking appliance according to an embodiment of the present disclosure.

The working coil 150 may be wound around a working coil base 210. The working coil base 210 may guide a position at which the working coil 150 is wound and may fix the wound working coil 150. For this, a plurality of partition walls may be disposed on the working coil base 210. The partition walls may space each turn of the working coil 150 from each other.

The working coil base 210 may be fixed to an aluminum plate 220. For example, the working coil base 210 may be coupled to the aluminum plate 220 through a screw or the like. The aluminum plate 220 may support the working coil base 210.

The sensor supporter 1000 may be supported on at least one of the working coil base 210 or the aluminum plate 220. The sensor supporter 1000 may be fixed to at least one of the working coil base 210 or the aluminum plate 220.

In the present disclosure, the sensor supporter 1000 will be described assuming that the sensor supporter 1000 is fixed to each of the working coil base 210 and the aluminum plate 220. For example, a first fixing part 1001 and a second fixing part 1101 may be disposed on the sensor supporter 1000.

Referring to the example of FIG. 6, the first fixing portion 1001 may be a through-hole through which a screw or the like passes. A portion of the sensor supporter 1000 may be fixed to the aluminum plate 220 by the screw passing through the first fixing portion 1001.

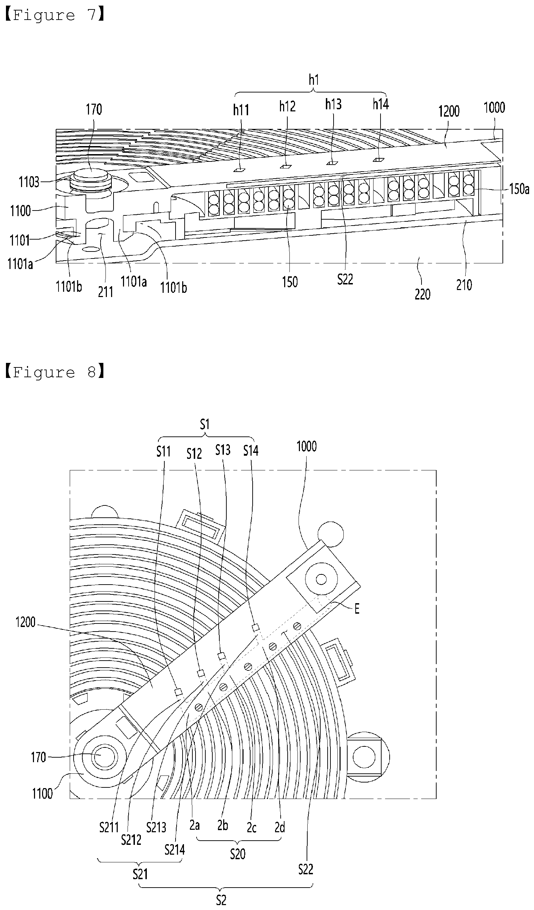

The second fixing part 1101 will be described with reference to FIG. 7.

FIG. 7 is a cross-sectional view of the sensor supporter and the working coil according to an embodiment of the present disclosure.

A central hole 211 passing in the vertical direction may be defined in a center of the working coil base 210. The central hole 211 may be a passage through which a harness (not shown) connected to the main temperature sensor 170 passes. In addition, the central hole 211 may be a coupling space into which the second fixing part 1101 is inserted. For example, the second fixing portion 1101 may be a pair of fitting portions 1101a with a space therebetween, and a protrusion 1101b may be disposed on each of both ends of each pair of fitting portions 110a. The pair of fitting portions 1101a may have elasticity due to the space defined therebetween, and thus, the pair of fitting portions 110a may be fixed by the protrusion 1101b after passing through the central hole 211. That is, the second fixing portion 1101 may be fixed to the working coil base 210 in a manner, in which the second fixing portion 1101 is forcibly inserted into the working coil base 210.

The sensor supporter 1000 may be supported on the working coil base 210 or the aluminum plate 220 by at least one of the first fixing portion 1001 or the second fixing portion 1101, which are described above.

The sensor supporter 1000 may be provided with a main mounting portion 1100 on which the main temperature sensor 170 is mounted and a sub mounting portion 1200 on which the sub temperature sensor 180 is mounted.

The main mounting portion 1100 may be disposed at a center of the working coil base 210. That is, the main mounting portion 1100 may be disposed to overlap the center of the working coil base 210 in the vertical direction. In addition, the main mounting unit 1100 may be disposed at the center of the working coil 150. That is, the main mounting portion 1100 may be disposed to overlap the center of the working coil 150 in the vertical direction. In summary, the main mounting portion 1100, the center of the working coil base 210, and the center of the working coil 150 may be disposed to overlap each other in the vertical direction.

The main mounting portion 1100 may be disposed above the second fixing portion 1101.

The main temperature sensor 170 may be disposed on the main mounting portion 1100, and the main temperature sensor 170 may be fixed by the sensor fixing portion 1103. The sensor fixing portion 1103 may be a circular rubber. The sensor fixing portion 1103 may allow the main temperature sensor 170 to be in close contact with the upper plate 11.

The sub mounting portion 1200 may be disposed between the main mounting portion 1100 and the first fixing portion 1001. The sub mounting portion 1200 may be disposed between the main mounting portion 1100 and an outer perimeter 50a of the working coil 150.

The sub mounting portion 1200 may be disposed above the working coil 150. The sub mounting portion 1200 may be disposed in a direction transverse to the direction in which the working coil 150 is wound. The sub mounting portion 1200 may be disposed in a direction perpendicular to the direction in which the working coil 150 is wound.

The sensor supporter 1000 may be disposed in an outward direction from the center of the working coil 150. In addition, the direction in which the sensor supporter 1000 is directed may not be limited. That is, the sensor supporter 1000 may be disposed in any direction of about 360 degrees, such as about 3 o'clock, about 6 o'clock, or about 12 o'clock, from the center of the working coil 150.

An opening hole h1 may be defined in a top surface of the sub mounting portion 1200 to allow the sub temperature sensor 180 to be in contact with the upper plate 11.

A sensor space S1 (see FIG. 8) in which the sub temperature sensor 180 is disposed and a harness space S2 through which a harness connected to the sub temperature sensor 180 passes may be defined in the sub mounting portion 1200. Here, the sensor space S1 may be in communication with the opening hole h1. Thus, the sub temperature sensor 180 disposed in the sensor space S1 may be in contact with the bottom surface of the upper plate 11 through the opening hole h1. In this respect, the opening hole h1 may be a portion of the sensor space S1.

One or more sub temperature sensors 180 may be provided in the cooking appliance 1. For example, the cooking appliance 1 may include a plurality of sub temperature sensors 180. As the number of sub temperature sensors 180 provided in the cooking appliance 1 increases, temperature estimation accuracy may be improved. In this specification, it is assumed that the cooking appliance 1 is provided with four sub temperature sensors 180, but this is only an example for convenience of explanation. That is, the number of sub temperature sensors 180 provided in the cooking appliance 1 may vary.

The number of opening holes h1 may be one or more. The opening hole h1 may be defined as large one in which all the sub temperature sensors 180 are disposed therein. Alternatively, the opening hole h1 may be defined to correspond to each of the plurality of sub temperature sensors 180. In this specification, it is assumed that the opening hole h1 is defined to correspond to each of the plurality of sub temperature sensors 180.

First to fourth opening holes h11, h12, h13, and h14 corresponding to the first to fourth sub temperature sensors 180, respectively, may be defined in the sub mounting portion 1200. Each of the first to fourth sub temperature sensors 180 may sense a temperature by being in contact with the bottom surface of the upper plate 11 through each of the first to fourth opening holes h11, h12, h13, and h14.

Each of the plurality of sub temperature sensors 180 may be disposed at different distances from the center of the working coil 150. Thus, there is an advantage in that the temperature distribution of the upper plate 11 is more accurately estimated in consideration of a magnetic field concentration area formed according to the spaced distance from the center of the working coil 150.

Like the plurality of sub temperature sensors 180, a plurality of sensor spaces S1 in which the plurality of sub temperature sensors 180 are disposed may be defined in the sub mounting portion 1200.

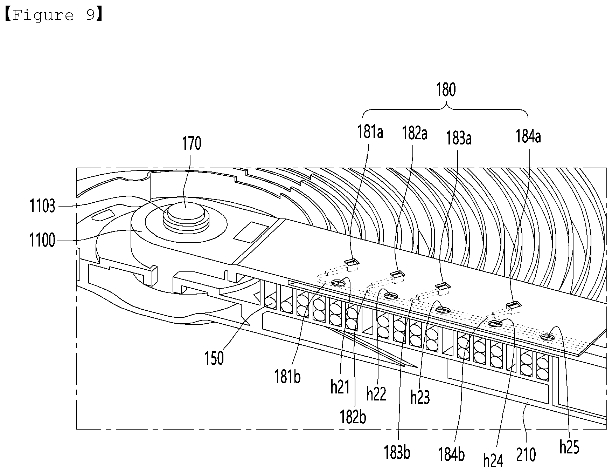

FIG. 8 is a view illustrating a space in which the plurality of sub temperature sensors are disposed according to an embodiment of the present disclosure, and FIG. 9 is a view illustrating a state in which the plurality of sub temperature sensors are disposed in the space illustrated in FIG. 8.

The sub mounting portion 1200 may have first to fourth sensor spaces S11, S12, S13, and S14 in which the first to fourth sub temperature sensors 181a, 182a, 183a, and 184a are disposed, respectively.

That is, the plurality of sensor spaces S1 may include first to fourth sensor spaces S11, S12, S13, and S14. Each of the plurality of sensor spaces S1 may have a different spaced distance from the main mounting unit 1100. That is, each of the plurality of sensor spaces S1 may have a different distance from the center of the working coil 150. For example, the first sensor space S11 may be defined at a first distance from the center of the working coil 150, the second sensor space S12 may be defined at a second distance greater than the first distance from the center of the working coil 150, the third sensor space S13 may be defined at a third distance greater than the second distance from the center of the working coil 150, and the fourth sensor space S14 may be defined at a fourth distance greater than the third distance from the center of the working coil 150. Thus, the first sub temperature sensor 181a may sense a temperature of an area of the upper plate 11 that is the first distance away from the center of the working coil 150, the second sub temperature sensor 182a may sense a temperature of an area of the upper plate 11 that is the second distance away from the center of the working coil 150, the third sub-temperature sensor 183a may sense a temperature of an area of the upper plate 11 that is the third distance away from the center of the working coil 150, and the fourth sub temperature sensor 184a may sense a temperature of an area of the upper plate 11 that is the fourth distance away from the center of the working coil 150.

The plurality of sensor spaces S11, S12, S13, and S14 may be disposed in a straight line. That is, the plurality of sensor spaces S11, S12, S13, and S14 may be disposed in a row.

A harness space S2 may be further defined in the sub mounting portion 1200 in which harnesses 181b, 182b, 183b, and 184b connected to the sub temperature sensor 180 are disposed. The harnesses 181b, 182b, 183b, and 184b may include a first harness 181b connected to the first sub temperature sensor 181a, a second harness 182b connected to the second sub temperature sensor 182a, a third harness 183b connected to the third sub temperature sensor 183a, and a fourth harness 184b connected to the fourth sub temperature sensor 184a.

The harnesses may be disposed inside the sub mounting portion 1200 of the harness space S2. The harness space S2 may be connected to the sensor space S1. The harness space S2 may be a passage through which the harness connected to the sub temperature sensor 180 passes.

The harness space S2 may have a bent portion S20 that is bent at least once. The bent portion S20 may be a structure for fixing the sub temperature sensor 180. Specifically, if the harness space S2 is provided in a straight line, when an external impact such as shaking occurs in the cooking appliance 1, the harness 181b, 182b, 183b, and 184b be shaken together with the sub temperature sensor 180. However, even if the external impact occurs in the cooking appliance 1, the bent portion S20 may minimize a clearance of each of the harnesses 181b, 182b, 183b, and 184b, and the shaking of the sub temperature sensor 180 may also be minimized.

Particularly, the bent portion S20 may be bent toward an opposite side of a harness outlet E. Referring to FIG. 8, the bent portion S20 may be convexly bent toward the center of the working coil 150. The harness outlet E may be a hole defined in the sensor supporter 1000 so that the other end of the harness of which one end is connected to the sub temperature sensor 180, is connected to a PCB (not shown), etc., and when the bent portion S20 is bent to an opposite side of the harness outlet E, an effect of fixing the sub temperature sensor 180 may be improved.

The harness space S2 may be constituted by a sensor connection portion S21 and an outlet connection portion S22.

The sensor connection portion S21 may be a space in which the harness connected to each of the sub temperature sensors 180 disposed in the sensor space S1 is disposed, and the outlet connection portion S22 may be a space in which the harness disposed in the sensor connection portion S21 is disposed may be a space defined to extend up to the harness outlet E.

The sensor connection portion 21 and the outlet connection portion S22 may be distinguished by the bent portion S20. The bent portion S20 may have a bent structure for fixing the sub temperature sensor 180 and may be a portion of each of the sensor connection portion 21 and the outlet connection portion S22.

In the present specification, the bent portion S20 will be described assuming that the bent portion S20 is a portion of the outlet connection portion S22. First to fourth bent portions 2a, 2b, 2c, and 2d may be disposed on the outlet connection portion S22, and first to fourth bent portions 2a, 2b, 2c, and 2d may be structures for fixing the first to fourth sub temperature sensors 181a, 182a, 183a, and 184a, respectively.

The first bent portion 2a may be connected to the first sensor connection portion S211, the second bent portion 2b may be connected to the second sensor connection portion S212, and the third bent portion 2c may be connected to the third sensor connection portion S213, and the fourth bent portion 2d may be connected to the fourth sensor connection portion S214.

The sensor connection portion S21 may include a first sensor connection portion S211 connecting the first sensor space S11 to the first bent portion 2a, a second sensor connection portion S212 connecting the second sensor space S12 to the second bent portion 2b, a third sensor connection portion S213 connecting the third sensor space S13 to the third bent portion 2c, and a fourth sensor connection portion S214 connecting the fourth sensor space S14 to the fourth bent portion 2d.

The harnesses 181b, 182b, 183b, and 184b respectively connected to the first to fourth sub temperature sensors 181a, 182a, 183a, and 184a may be gathered to the outlet connection portion S22 via the first to fourth sensor connection portions S211, S212, S213, and S214. The harnesses 181b, 182b, 183b, and 184b gathered to the outlet connection portion S22 may pass through the harness outlet E.

According to an embodiment, at least one discharge hole h21, h22, h23, h24, or h25 may be defined in the top surface of the sub mounting portion 1200. Discharge holes h21, h22, h23, h24, and h25 may be defined above the outlet connection portion S22. The discharge holes h21, h22, h23, h24, and h25 and the outlet connection portion S22 may be connected to each other. The discharge holes h21, h22, h23, h24, and h25 may be holes through which heat generated in the harnesses 181b, 182b, 183b, and 184b is discharged out of the sub mounting portion 1200. Thus, a limitation of damaging the harnesses 181b, 182b, 183b, and 184b due to an increase in temperature of the outlet connection portion S22 may be minimized.

Thermal grease may be filled in the sensor space S1. The thermal grease may be a fluid material that transfers heat. The thermal grease may protect the sub temperature sensor 180 from an external impact, etc. in the sensor space S1. In addition, the thermal grease may transfer the heat of the upper plate 11 to the sub temperature sensor 180 to more improve the sensing speed with respect to the temperature of the bottom surface of the upper plate 11 through the sub temperature sensor 180.

However, the main temperature sensor and sub temperature sensor are only examples. That is, the number, type, and name of plurality of temperature sensors provided to sense the temperatures of several areas in one heating zone are not limited to the above number, type, and name.

The plurality of temperature sensors may include a thermistor, and the thermistor has a characteristic in which a resistance value thereof is changed depending on the temperature. In addition, the resistance value of the thermistor has non-linear characteristics.

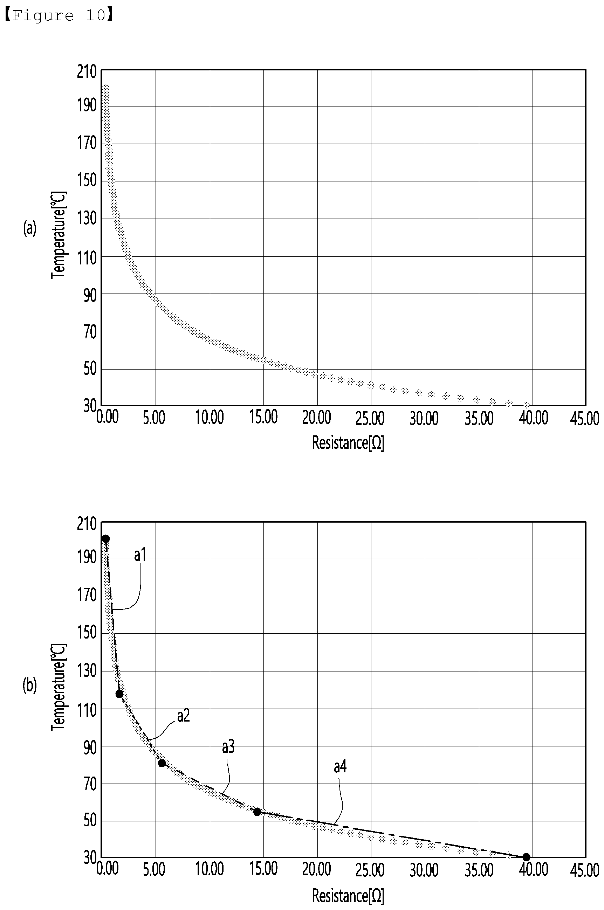

FIG. 10 is a view for explaining resistance value characteristics of the thermistor according to an embodiment of the present disclosure.
(a) of FIG. 10 is a graph illustrating a relationship between a resistance value of the thermistor and a temperature. As a temperature of the thermistor increases, a resistance value may decrease, and as the temperature of thermistor decreases, the resistance value may increase. That is, the resistance value of the thermistor increases as the temperature decreases. However, as illustrated in (a) of FIG. 10, the resistance value depending on the temperature of the thermistor has non-linear characteristics.
   Thus, when a sensing value of the temperature sensor including the thermistor is applied to one fixed temperature prediction function, there is a limitation that an error increases. In addition, when the cooking appliance that senses a wide temperature range from about 30 degrees to 230 degrees uses only one fixed temperature prediction function, there is a limitation of increasing in sensing error. Therefore, a structure in which the resistance value range is divided into a plurality of sections, and a different temperature prediction function is applied to each of the divided resistance value sections, is required.
(b) of FIG. 10 illustrates an example in which the resistance value range is divided into four sections, and first to fourth temperature prediction functions a1, a2, a3, and a4 to be respectively applied to the divided resistance value sections are illustrated. However, the number of divided sections and the temperature prediction function may vary.

Hereinafter, the resistance value range will be divided into two sections and explained assuming that one of two temperature prediction functions is applied depending on the resistance value. However, since this is only an example for convenience of explanation, it is reasonable that it is not limited thereto.

The cooking appliance according to an embodiment of the present disclosure may be implemented to receive sensing values of the plurality of temperature sensors through one A/D port and thus may include a switch for reading the sensing values of the plurality of temperature sensors and may change the temperature prediction function applied to the input sensing value. Here, the switch may be an analog switch.

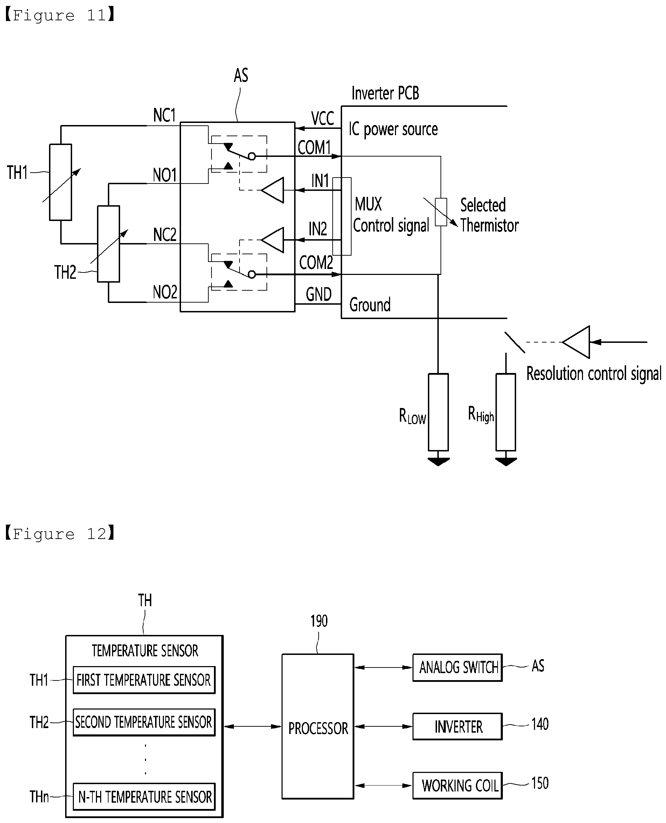

FIG. 11 is a circuit diagram illustrating the plurality of temperature sensors and the analog switch of the cooking appliance according to an embodiment of the present disclosure. FIG. 12 is a control block diagram of the cooking appliance according to an embodiment of the present disclosure.

In the example of FIG. 11, it is assumed that the cooking device includes two temperature sensors TH1 and TH2, but this is only an example for convenience of explanation. Thus, it is reasonable that the cooking device is not limited thereto.

The cooking appliance 10 may include first and second temperature sensors TH1 and TH2 and an analog switch AS.

The analog switch AS may select and output only one of a sensing value of the first temperature sensor TH1 and a sensing value of the second temperature sensor TH2. Specifically, the analog switch AS may alternately output the sensing value of the first temperature sensor TH1 and the sensing value of the second temperature sensor TH2 for each preset period. The processor 190 may control the analog switch AS to alternately output the sensing value of the first temperature sensor TH1 and the sensing value of the second temperature sensor TH2 for each preset period. The analog switch AS may be a type of multiplexer, and the processor 190 may control the analog switch AS by transmitting a MUX control signal to the analog switch AS.

That is, the cooking appliance according to an embodiment of the present disclosure may use the analog switch to read the sensing values of a plurality of temperature sensors TH1 and TH2 and sequentially acquire the sensing values of the plurality of temperature sensors TH1 and TH2.

Since the temperature according to the sensing values of the plurality of temperature sensors TH1 and TH2 has a wide range (for example, about 30 degrees to about 230 degrees), the cooking appliance 10 may include a resolution change circuit to apply a different temperature prediction function for each section. The resolution change circuit may use a transistor. Resolution may represent a range of a physical quantity to be measured, i.e., an output range of the sensor.

The cooking appliance 10 may change the temperature prediction function to be applied according to the sensing values of the plurality of temperature sensors TH1 and TH2 through the resolution change circuit. For example, the processor 190 may transmit a resolution control signal to the resolution change circuit so that the temperature prediction function to which the sensed value is applied is changed based on the sensed values of the plurality of temperature sensors TH1 and TH2.

Referring to FIG. 12, the cooking appliance 10 may include a temperature sensor TH, an analog switch AS, an inverter 140, a working coil 150, and a processor 190, but this is only an example. For example, some of the above components may be omitted, or other components may be added.

The processor 190 may control each of the plurality of temperature sensors TH, the analog switch AS, the inverter 140, and the working coil 150.

The temperature sensor TH may include a first temperature sensor TH1, a second temperature sensor TH2,..., an n-th temperature sensor THn. That is, the temperature sensor TH may be provided in plurality, and the number of temperature sensors TH may vary. In the present disclosure, for convenience of explanation, it is assumed that the cooking appliance 10 includes two temperature sensors TH1 and TH2. In addition, in the present disclosure, for convenience of explanation, it is assumed that the sensing value of the temperature sensor TH is applied to one of the two temperature prediction functions, but the number of temperature prediction functions may also more increase.

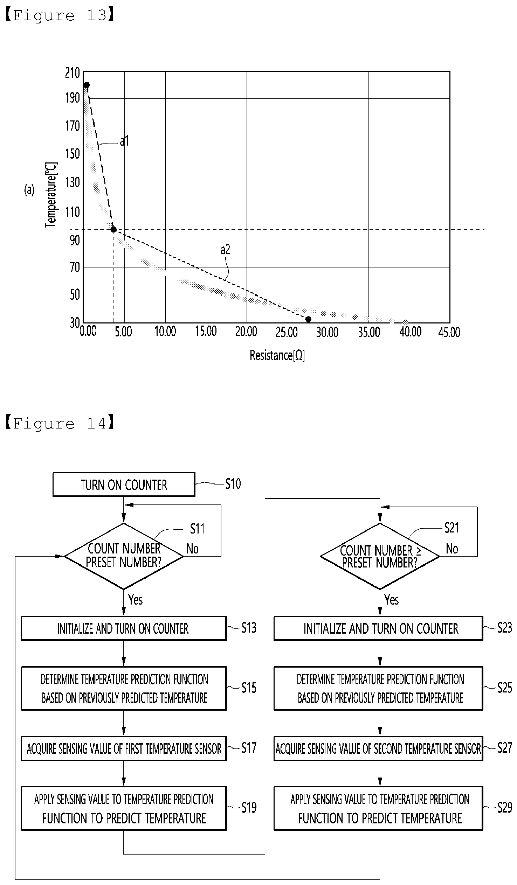

FIG. 13 is a view illustrating the temperature prediction function used in the cooking appliance according to an embodiment of the present disclosure.

The processor 190 may acquire the temperature by applying the sensing value of the temperature sensor TH to one of the first temperature prediction function a1 and the second temperature prediction function a2.

The sensing value of the temperature sensor TH may be a resistance value. When the sensing value of the temperature sensor TH ranges from about 0.00 to about 4.00, the processor 190 may acquire the temperature by applying the sensing value to the first temperature prediction function a1, and when the sensing value of the temperature sensor TH is about 4.00 or more, the processor 190 may acquire the temperature by applying the sensing value to the second temperature prediction function a2.

FIG. 14 is a flowchart illustrating an operating method of the cooking appliance according to an embodiment of the present disclosure.

A processor 190 may turn on a counter (S10).

The processor 190 may alternately acquire sensing values of the first and second temperature sensors TH1 and TH2 for each preset period. Here, the counter may be turned on to acquire the period. When the count number is a preset reference number, the processor 190 may recognize that the preset period has been reached.

The processor 190 may determine whether the count number is greater than or equal to the preset number (S11).

When the count number is less than the preset number, the processor 190 may continue to turn on the counter.

When the count number is equal to or greater than the preset number, the processor 190 may initialize and turn on the counter (S13).

When the count number is greater than or equal to the preset number, the processor 190 may recognize that the preset period has been reached and may initialize the counter for recognizing the next period and then turn on the counter.

The processor 190 may determine the temperature prediction function based on the previously predicted temperature (S15), acquire the sensing value of the first temperature sensor TH1 (S17), and apply the sensing value to the temperature prediction function to predict the temperature (S19).

The processor 190 may predict the temperature through the sensing value of the first temperature sensor TH1 and then determine whether the count number is equal to or greater than the preset number (S21).

This is done for determining whether a period for acquiring the sensing value of the second temperature sensor TH2 has been reached.

When the count number is less than the preset number, the processor 190 may continue to turn on the counter.

When the count number is equal to or greater than the preset number, the processor 190 may initialize and turn on the counter (S23).

Likewise, when the count number is greater than or equal to the preset number, the processor 190 may recognize that the preset period has been reached and may initialize the counter for recognizing the next period and then turn on the counter.

The processor 190 may determine the temperature prediction function based on the previously predicted temperature (S25), acquire the sensing value of the second temperature sensor TH2 (S27), and apply the sensing value to the temperature prediction function to predict the temperature (S29).

The processor 190 may predict the temperature through the sensing value of the second temperature sensor TH2 and then determine whether the count number is equal to or greater than the preset number (S11).

As described above, the processor 190 may predict the temperature by alternately using the first temperature sensor TH1 and the second temperature sensor TH2, and simultaneously, the temperature prediction function may be determined based on the previously predicted temperature.

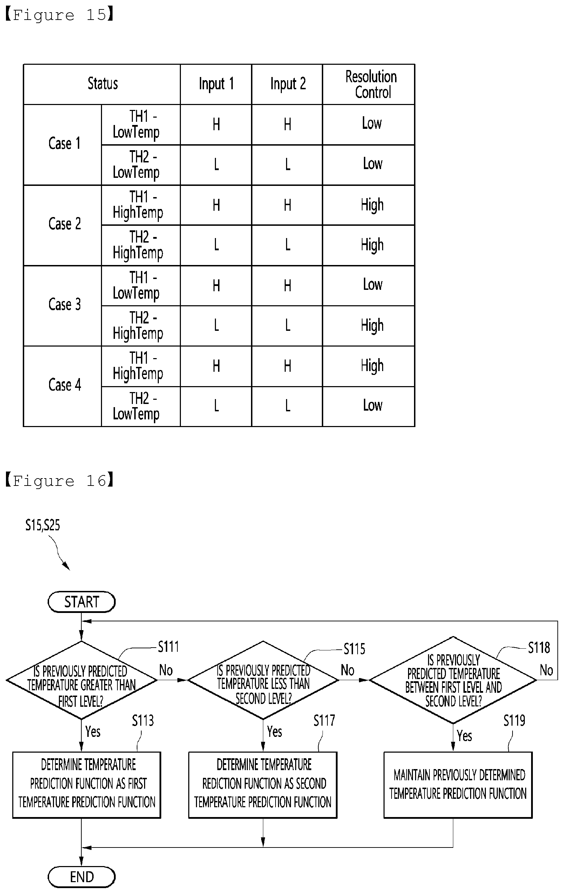

Next, with reference to FIGS. 15 and 16, a method for determining the temperature prediction function based on the temperature that is previously predicted by the cooking appliance 10 according to an embodiment of the present disclosure will be described.

FIG. 15 is a table for explaining the method for determining the temperature prediction function through the cooking appliance according to an embodiment of the present disclosure.

The processor 190 may adjust an input signal output to the analog switch AS to acquire the sensing value of the first temperature sensor TH1 or the sensing value of the second temperature sensor TH2. For example, the processor 190 may output all of a first input signal and a second input signal as High to acquire the sensing value of the first temperature sensor TH1 and output all of the first input signal and the second input signal as Low to the analog switch AS to acquire the sensing value of the second temperature sensor TH2.

The processor 190 may determine a temperature prediction function based on the temperature of each temperature sensor when acquiring the sensing value of each temperature sensor. Here, the temperature of each temperature sensor may be a temperature that is most recently predicted by each temperature sensor and may represent the previously predicted temperature. The temperature prediction function may be adjusted differently depending on the temperature sensor. That is, the temperature prediction function may be independently/individually adjusted for each temperature sensor.

A first case Case 1 of FIG. 15 may be a case in which a temperature previously predicted by the first temperature sensor TH1 is in a low temperature range Low Temp, and a temperature previously predicted by the second temperature sensor TH2 is in the low temperature range Low Temp. When both the first and second input signals are output as high, the processor 190 may output Low as a resolution control signal so that the temperature prediction function is determined as the temperature prediction function corresponding to the low temperature range, and when both the first and second input signals are output as Low, the processor 190 may output Low as the resolution control signal so that the temperature prediction function is determined as the temperature prediction function corresponding to the low temperature range.

A second case Case 2 of FIG. 15 may be a case in which a temperature previously predicted by the first temperature sensor TH1 is in a high temperature range High Temp, and a temperature previously predicted by the second temperature sensor TH2 is in the high temperature range High Temp. When both the first and second input signals are output as high, the processor 190 may output High as a resolution control signal so that the temperature prediction function is determined as the temperature prediction function corresponding to the low temperature range, and when both the first and second input signals are output as High, the processor 190 may output High as the resolution control signal so that the temperature prediction function is determined as the temperature prediction function corresponding to the high temperature range.

A third case Case 3 of FIG. 15 may be a case in which a temperature previously predicted by the first temperature sensor TH1 is in a low temperature range Low Temp, and a temperature previously predicted by the second temperature sensor TH2 is in the high temperature range High Temp. When both the first and second input signals are output as high, the processor 190 may output Low as a resolution control signal so that the temperature prediction function is determined as the temperature prediction function corresponding to the low temperature range, and when both the first and second input signals are output as Low, the processor 190 may output High as the resolution control signal so that the temperature prediction function is determined as the temperature prediction function corresponding to the high temperature range.

A fourth case Case 4 of FIG. 15 may be a case in which a temperature previously predicted by the first temperature sensor TH1 is in a high temperature range High Temp, and a temperature previously predicted by the second temperature sensor TH2 is in the low temperature range Low Temp. When both the first and second input signals are output as high, the processor 190 may output High as a resolution control signal so that the temperature prediction function is determined as the temperature prediction function corresponding to the low temperature range, and when both the first and second input signals are output as High, the processor 190 may output Low as the resolution control signal so that the temperature prediction function is determined as the temperature prediction function corresponding to the low temperature range.

That is, the processor 190 may determine the temperature prediction function depending on whether the previously predicted temperature is in the high temperature range or the low temperature range.

According to one embodiment, the processor 190 may determine whether the previously predicted temperature is in the high temperature range or the low temperature range based on a specific temperature. This may be a case in which a first level and a second level, which will be described later, are the same.

When the temperature prediction function is determined based on one specific temperature, the temperature prediction function may be changed sensitively to deteriorate reliability. For example, if it is less than a specific temperature based on the specific temperature (for example, about 90 degrees), it is considered as the low temperature range to outputs Low as the resolution control signal, and also, it is greater than the specific temperature, it is considered as a high temperature range to outputs High as the resolution control signal, when an actual temperature is between about 88 degrees and about 92 degrees, the temperature prediction function may be continuously changed, and thus, the predicted temperature may vary significantly.

Thus, according to another embodiment, in the cooking appliance 10, a temperature that is a reference for considering a change from the low temperature range to the high temperature range (for example, a first temperature to be described later) and a temperature that is a reference for considering a change from the high temperature range to the low temperature range (for example, a second temperature to be described later) may be set differently.

FIG. 16 is a flowchart of a method for determining the temperature prediction function according to an embodiment of the present disclosure.

FIG. 16 is a flowchart embodying operations S15 and S25 of FIG. 14.

The first level and second level, which will be described later, may be preset values. For example, the first level and the second level may be set previously when the cooking appliance 10 is manufactured.

The processor 190 may determine whether the previously predicted temperature is greater than the first level (S111).

If the previously predicted temperature is greater than the first level, the processor 190 may determine the temperature prediction function as a first temperature prediction function (S113).

That is, if the previously predicted temperature is greater than the first level, the processor 190 may determine that the previously predicted temperature is in the high temperature range to determine the temperature prediction function as the first temperature prediction function that is the temperature prediction function corresponding to the high temperature range.

If the previously predicted temperature is not greater than the first level, the processor 190 may determine whether the previously predicted temperature is less than the second level (S115).

The second level may be less than the first level.

If the previously predicted temperature is less than the second level, the processor 190 may determine the temperature prediction function as a second temperature prediction function (S117).

That is, if the previously predicted temperature is less than the second level, the processor 190 may determine that the previously predicted temperature is in the low temperature range to determine the temperature prediction function as the second temperature prediction function that is the temperature prediction function corresponding to the low temperature range.

If the previously predicted temperature is not less than the second level, the processor 190 may determine whether the previously predicted temperature is between the first level and the second level (S118).

If the previously predicted temperature is between the first level and the second level, the processor 190 may determine that the previously determined temperature prediction function is maintained (S119).

According to an embodiment, the processor 190 may omit operation S118.

As described above, when designing the temperature that is the reference for changing the first temperature prediction function into the second temperature prediction function and the temperature that is the reference for changing the second temperature prediction function into the first temperature prediction function, the resolution changing circuit may sensitively response at a conversion point to improve the reliability.

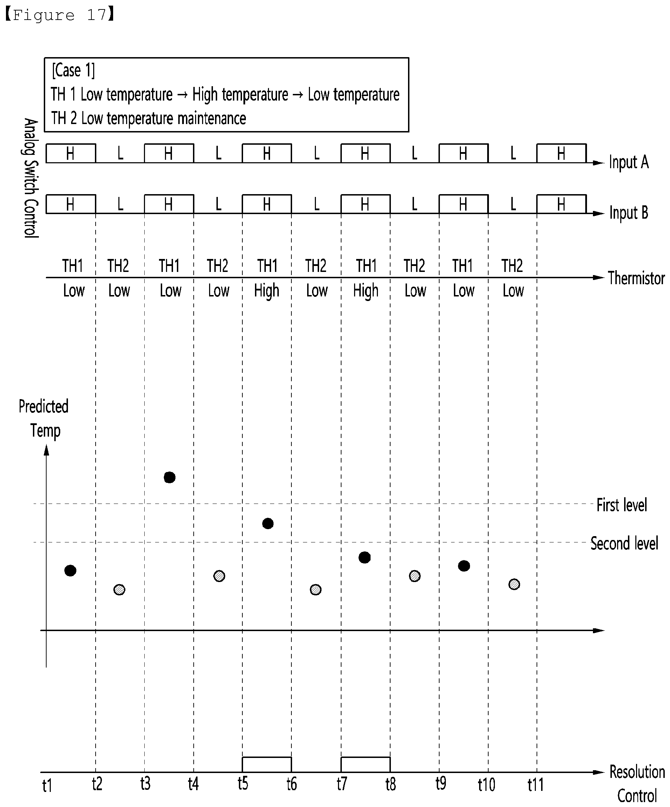

Hereinafter, the method for determining the temperature prediction function for each temperature sensor will be described with reference to specific examples of FIGS. 17 to 20.

The processor 190 may change a first input signal Input A and a second input signal Input B from High to Low and from Low to High for each preset period so as to be output to the analog switch AS, thereby alternatively acquiring the sensing value of the first temperature sensor TH1 and the sensing value of the second temperature sensor TH2.

When power of the cooking appliance 10 is turned on from off, there is no previously predicted temperature, and thus, when the power of the cooking appliance 10 is turned on from off, the processor 190 may apply the sensing value of each of the first temperature sensor TH1 and the second temperature sensor TH2 to the temperature prediction function (second temperature prediction function) corresponding to the low temperature range to predict the temperature. That is, the processor 190 may predict the temperature by applying the sensing value of the first temperature sensor TH1 to the second temperature prediction function from the first time point t1 to the second time point t2 and may predict the temperature by applying the sensing value of the second temperature sensor TH2 from the second time point t2 to the third time point t3 to the second temperature prediction function. Thus, the processor 190 may output Low as the resolution control signal from the first time point t1 to the third time point t3.

FIG. 17 is a view illustrating a first example for explaining the method for determining the temperature prediction function for each temperature sensor through the cooking appliance according to an embodiment of the present disclosure.

At a first time point t1, the processor 190 may acquire a sensing value of the first temperature sensor TH1 to apply the sensing value to the second temperature prediction function, which may be less than the second level.

At a second time point t2, the processor 190 may acquire a sensing value of the second temperature sensor TH2 to apply the sensing value to the second temperature prediction function, which may be less than the second level.

At the third time point t3, the processor 190 may determine the temperature prediction function as the second temperature prediction function because the previously predicted temperature (temperature predicted between the time points t1 and t2) is less than the second level. As a result, the processor 190 may output Low as the resolution control signal from the third time point t3 to the fourth time point t4. Thus, when the processor 190 acquires the sensing value of the first temperature sensor TH1, the sensing value may be applied to the second temperature prediction function, and the resultant predicted temperature may be greater than the first level.

At the fourth time point t4, the processor 190 may determine the temperature prediction function as the second temperature prediction function because the previously predicted temperature (temperature predicted between the time points t2 and t3) is less than the second level. Thus, the processor 190 may output Low as the resolution control signal from the fourth time point t4 to the fifth time point t5. Thus, when the processor 190 acquires the sensing value of the second temperature sensor TH2, the sensing value may be applied to the second temperature prediction function, and the resultant predicted temperature may be less than the second level.

At the fifth time point t5, the processor 190 may determine the temperature prediction function as the first temperature prediction function because the previously predicted temperature (temperature predicted between the time points t3 and t4) is greater than the first level. Thus, the processor 190 may output High as the resolution control signal from the fifth time point t5 to the sixth time point t6. Thus, when the processor 190 acquires the sensing value of the first temperature sensor TH1, the sensing value may be applied to the first temperature prediction function, and the resultant predicted temperature may be between the first level and the second level.

At the sixth time point t6, the processor 190 may determine the temperature prediction function as the second temperature prediction function because the previously predicted temperature (temperature predicted between the time points t4 and t5) is less than the second level. Thus, the processor 190 may output Low as the resolution control signal from the sixth time point t6 to the seventh time point t7. Thus, when the processor 190 acquires the sensing value of the second temperature sensor TH2, the sensing value may be applied to the second temperature prediction function, and the resultant predicted temperature may be less than the second level.

At the seventh time point t7, the processor 190 may maintain the temperature prediction function as the previously determined first temperature prediction function because the previously predicted temperature (temperature predicted between the time points t5 and t6) is between the first level and the second level. Thus, the processor 190 may output High as the resolution control signal from the seventh time point t7 to the eighth time point t8. Thus, when the processor 190 acquires the sensing value of the first temperature sensor TH1, the sensing value may be applied to the first temperature prediction function, and the resultant predicted temperature may be less than the second level.

At the eighth time point t8, the processor 190 may determine the temperature prediction function as the second temperature prediction function because the previously predicted temperature (temperature predicted between the time points t6 and t7) is less than the second level. Thus, the processor 190 may output Low as the resolution control signal from the eighth time point t8 to the ninth time point t9. Thus, when the processor 190 acquires the sensing value of the second temperature sensor TH2, the sensing value may be applied to the second temperature prediction function, and the resultant predicted temperature may be less than the second level.

At the ninth time point t9, the processor 190 may determine the temperature prediction function as the second temperature prediction function because the previously predicted temperature (temperature predicted between the time points t7 and t8) is less than the second level. Thus, the processor 190 may output Low as the resolution control signal from the ninth time point t9 to the tenth time point t10. Thus, when the processor 190 acquires the sensing value of the first temperature sensor TH1, the sensing value may be applied to the second temperature prediction function, and the resultant predicted temperature may be less than the second level.

At the tenth time point t10, the processor 190 may determine the temperature prediction function as the second temperature prediction function because the previously predicted temperature (temperature predicted between the time points t8 and t9) is less than the second level. Thus, the processor 190 may output Low as the resolution control signal from the tenth time point t10 to the eleventh time point t11. Thus, when the processor 190 acquires the sensing value of the second temperature sensor TH2, the sensing value may be applied to the second temperature prediction function, and the resultant predicted temperature may be less than the second level.

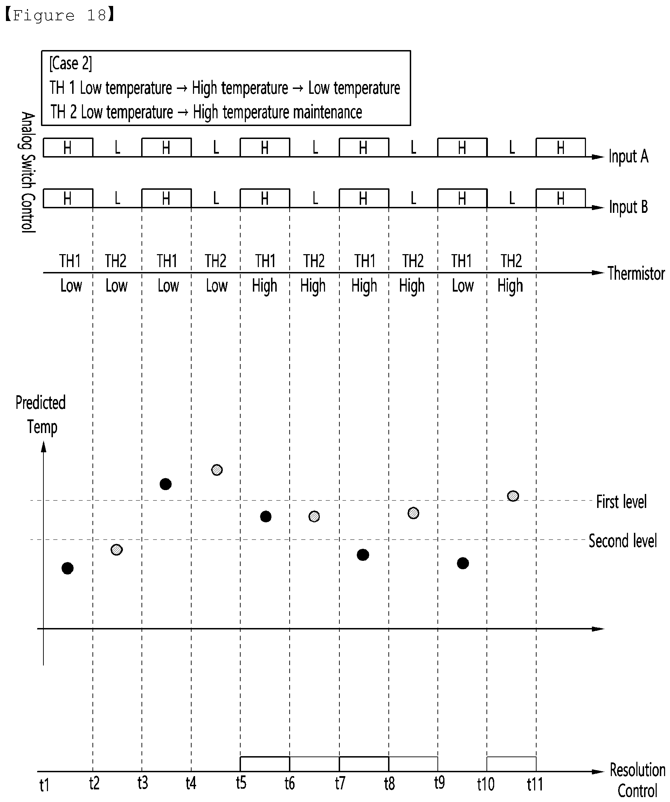

FIG. 18 is a view illustrating a second example for explaining the method for determining the temperature prediction function for each temperature sensor through the cooking appliance according to an embodiment of the present disclosure.

At a first time point t1, the processor 190 may acquire a sensing value of the first temperature sensor TH1 to apply the sensing value to the second temperature prediction function, which may be less than the second level.

At a second time point t2, the processor 190 may acquire a sensing value of the second temperature sensor TH2 to apply the sensing value to the second temperature prediction function, which may be less than the second level.

At the third time point t3, the processor 190 may determine the temperature prediction function as the second temperature prediction function because the previously predicted temperature (temperature predicted between the time points t1 and t2) is less than the second level. As a result, the processor 190 may output Low as the resolution control signal from the third time point t3 to the fourth time point t4. Thus, when the processor 190 acquires the sensing value of the first temperature sensor TH1, the sensing value may be applied to the second temperature prediction function, and the resultant predicted temperature may be greater than the first level.

At the fourth time point t4, the processor 190 may determine the temperature prediction function as the second temperature prediction function because the previously predicted temperature (temperature predicted between the time points t2 and t3) is less than the second level. Thus, the processor 190 may output Low as the resolution control signal from the fourth time point t4 to the fifth time point t5. Thus, when the processor 190 acquires the sensing value of the second temperature sensor TH2, the sensing value may be applied to the second temperature prediction function, and the resultant predicted temperature may be greater than the first level.

At the fifth time point t5, the processor 190 may determine the temperature prediction function as the first temperature prediction function because the previously predicted temperature (temperature predicted between the time points t3 and t4) is greater than the first level. Thus, the processor 190 may output High as the resolution control signal from the fifth time point t5 to the sixth time point t6. Thus, when the processor 190 acquires the sensing value of the first temperature sensor TH1, the sensing value may be applied to the first temperature prediction function, and the resultant predicted temperature may be between the first level and the second level.

At the sixth time point t6, the processor 190 may determine the temperature prediction function as the first temperature prediction function because the previously predicted temperature (temperature predicted between the time points t4 and t5) is greater than the first level. Thus, the processor 190 may output High as the resolution control signal from the sixth time point t6 to the seventh time point t7. Thus, when the processor 190 acquires the sensing value of the second temperature sensor TH2, the sensing value may be applied to the first temperature prediction function, and the resultant predicted temperature may be between the first level and the second level.

At the seventh time point t7, the processor 190 may maintain the temperature prediction function as the previously determined first temperature prediction function because the previously predicted temperature (temperature predicted between the time points t5 and t6) is between the first level and the second level. Thus, the processor 190 may output High as the resolution control signal from the seventh time point t7 to the eighth time point t8. Thus, when the processor 190 acquires the sensing value of the first temperature sensor TH1, the sensing value may be applied to the first temperature prediction function, and the resultant predicted temperature may be less than the second level.

At the eighth time point t8, the processor 190 may maintain the temperature prediction function as the previously determined first temperature prediction function because the previously predicted temperature (temperature predicted between the time points t6 and t7) is between the first level and the second level. Thus, the processor 190 may output High as the resolution control signal from the eighth time point t8 to the ninth time point t9. Thus, when the processor 190 acquires the sensing value of the second temperature sensor TH2, the sensing value may be applied to the first temperature prediction function, and the resultant predicted temperature may be between the first level and the second level.

At the ninth time point t9, the processor 190 may maintain the temperature prediction function as the previously determined first temperature prediction function because the previously predicted temperature (temperature predicted between the time points t7 and t8) is less than the second level. Thus, the processor 190 may output Low as the resolution control signal from the ninth time point t9 to the tenth time point t10. Thus, when the processor 190 acquires the sensing value of the first temperature sensor TH1, the sensing value may be applied to the second temperature prediction function, and the resultant predicted temperature may be less than the second level.

At the tenth time point t10, the processor 190 may maintain the temperature prediction function as the previously determined first temperature prediction function because the previously predicted temperature (temperature predicted between the time points t8 and t9) is between the first level and the second level. Thus, the processor 190 may output High as the resolution control signal from the tenth time point t10 to the eleventh time point t11. Thus, when the processor 190 acquires the sensing value of the second temperature sensor TH2, the sensing value may be applied to the first temperature prediction function, and the resultant predicted temperature may be greater than the first level.

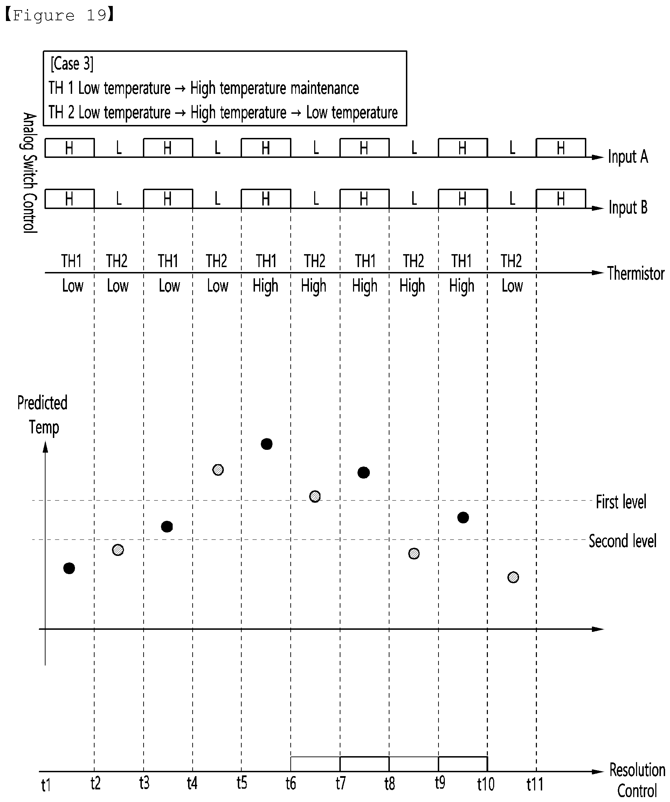

FIG. 19 is a view illustrating a third example for explaining the method for determining the temperature prediction function for each temperature sensor through the cooking appliance according to an embodiment of the present disclosure.

At the first time point t1, the processor 190 may acquire a sensing value of the first temperature sensor TH1 to apply the sensing value to the second temperature prediction function, which may be less than the second level.

At the second time point t2, the processor 190 may acquire a sensing value of the second temperature sensor TH2 to apply the sensing value to the second temperature prediction function, which may be less than the second level.

At the third time point t3, the processor 190 may determine the temperature prediction function as the second temperature prediction function because the previously predicted temperature (temperature predicted between the time points t1 and t2) is less than the second level. As a result, the processor 190 may output Low as the resolution control signal from the third time point t3 to the fourth time point t4. Thus, when the processor 190 acquires the sensing value of the first temperature sensor TH1, the sensing value may be applied to the second temperature prediction function, and the resultant predicted temperature may be between the first level and the second level.

At the fourth time point t4, the processor 190 may determine the temperature prediction function as the second temperature prediction function because the previously predicted temperature (temperature predicted between the time points t2 and t3) is less than the second level. Thus, the processor 190 may output Low as the resolution control signal from the fourth time point t4 to the fifth time point t5. Thus, when the processor 190 acquires the sensing value of the second temperature sensor TH2, the sensing value may be applied to the second temperature prediction function, and the resultant predicted temperature may be greater than the first level.

At the fifth time point t5, the processor 190 may maintain the temperature prediction function as the previously determined second temperature prediction function because the previously predicted temperature (temperature predicted between the time points t3 and t4) is between the first level and the second level. Thus, the processor 190 may output Low as the resolution control signal from the fifth time point t5 to the sixth time point t6. Thus, when the processor 190 acquires the sensing value of the first temperature sensor TH1, the sensing value may be applied to the second temperature prediction function, and the resultant predicted temperature may be greater than the first level.

At the sixth time point t6, the processor 190 may determine the temperature prediction function as the first temperature prediction function because the previously predicted temperature (temperature predicted between the time points t4 and t5) is greater than the first level. Thus, the processor 190 may output High as the resolution control signal from the sixth time point t6 to the seventh time point t7. Thus, when the processor 190 acquires the sensing value of the second temperature sensor TH2, the sensing value may be applied to the first temperature prediction function, and the resultant predicted temperature may be greater than the first level.

At the seventh time point t7, the processor 190 may maintain the temperature prediction function as the previously determined first temperature prediction function because the previously predicted temperature (temperature predicted between the time points t5 and t6) is greater than the first level. Thus, the processor 190 may output High as the resolution control signal from the seventh time point t7 to the eighth time point t8. Thus, when the processor 190 acquires the sensing value of the first temperature sensor TH1, the sensing value may be applied to the first temperature prediction function, and the resultant predicted temperature may be greater than the first level.

At the eighth time point t8, the processor 190 may determine the temperature prediction function as the first temperature prediction function because the previously predicted temperature (temperature predicted between the time points t6 and t7) is greater than the first level. Thus, the processor 190 may output High as the resolution control signal from the eighth time point t8 to the ninth time point t9. Thus, when the processor 190 acquires the sensing value of the second temperature sensor TH2, the sensing value may be applied to the first temperature prediction function, and the resultant predicted temperature may be less than the second level.

At the ninth time point t9, the processor 190 may determine the temperature prediction function as the first temperature prediction function because the previously predicted temperature (temperature predicted between the time points t7 and t8) is greater than the first level. Thus, the processor 190 may output High as the resolution control signal from the ninth time point t9 to the tenth time point t10. Thus, when the processor 190 acquires the sensing value of the first temperature sensor TH1, the sensing value may be applied to the first temperature prediction function, and the resultant predicted temperature may be between the first level and the second level.

At the tenth time point t10, the processor 190 may determine the temperature prediction function as the second temperature prediction function because the previously predicted temperature (temperature predicted between the time points t8 and t9) is less than the second level. Thus, the processor 190 may output Low as the resolution control signal from the tenth time point t10 to the eleventh time point t11. Thus, when the processor 190 acquires the sensing value of the second temperature sensor TH2, the sensing value may be applied to the second temperature prediction function, and the resultant predicted temperature may be less than the second level.

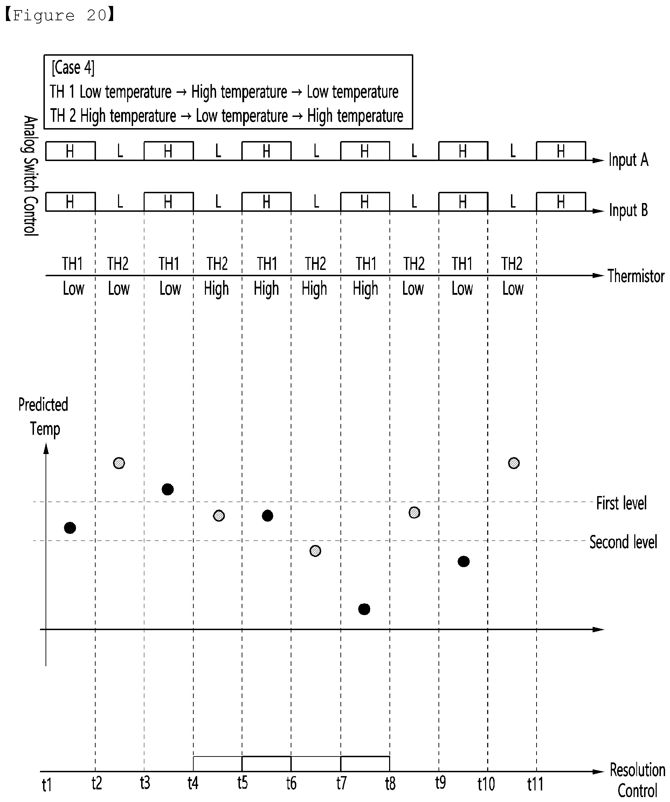

FIG. 20 is a view illustrating a fourth example for explaining the method for determining the temperature prediction function for each temperature sensor through the cooking appliance according to an embodiment of the present disclosure.

At the first time point t1, the processor 190 may acquire a sensing value of the first temperature sensor TH1 to apply the sensing value to the second temperature prediction function, which may be between the first level and the second level.

At the second time point t2, the processor 190 may acquire a sensing value of the second temperature sensor TH2 to apply the sensing value to the second temperature prediction function, which may be greater than the first level.

At the third time point t3, the processor 190 may maintain the temperature prediction function as the previously determined second temperature prediction function because the previously predicted temperature (temperature predicted between the time points t1 and t2) is between the first level and the second level. As a result, the processor 190 may output Low as the resolution control signal from the third time point t3 to the fourth time point t4. Thus, when the processor 190 acquires the sensing value of the first temperature sensor TH1, the sensing value may be applied to the second temperature prediction function, and the resultant predicted temperature may be greater than the first level.

At the fourth time point t4, the processor 190 may determine the temperature prediction function as the first temperature prediction function because the previously predicted temperature (temperature predicted between the time points t2 and t3) is greater than the first level. Thus, the processor 190 may output High as the resolution control signal from the fourth time point t4 to the fifth time point t5. Thus, when the processor 190 acquires the sensing value of the second temperature sensor TH2, the sensing value may be applied to the first temperature prediction function, and the resultant predicted temperature may be between the first level and the second level.

At the fifth time point t5, the processor 190 may determine the temperature prediction function as the first temperature prediction function because the previously predicted temperature (temperature predicted between the time points t3 and t4) is greater than the first level. Thus, the processor 190 may output High as the resolution control signal from the fifth time point t5 to the sixth time point t6. Thus, when the processor 190 acquires the sensing value of the first temperature sensor TH1, the sensing value may be applied to the first temperature prediction function, and the resultant predicted temperature may be between the first level and the second level.

At the sixth time point t6, the processor 190 may maintain the temperature prediction function as the previously determined first temperature prediction function because the previously predicted temperature (temperature predicted between the time points t4 and t5) is between the first level and the second level. Thus, the processor 190 may output High as the resolution control signal from the sixth time point t6 to the seventh time point t7. Thus, when the processor 190 acquires the sensing value of the second temperature sensor TH2, the sensing value may be applied to the first temperature prediction function, and the resultant predicted temperature may be less than the second level.

At the seventh time point t7, the processor 190 may maintain the temperature prediction function as the previously determined first temperature prediction function because the previously predicted temperature (temperature predicted between the time points t5 and t6) is between the first level and the second level. Thus, the processor 190 may output High as the resolution control signal from the seventh time point t7 to the eighth time point t8. Thus, when the processor 190 acquires the sensing value of the first temperature sensor TH1, the sensing value may be applied to the first temperature prediction function, and the resultant predicted temperature may be less than the second level.

At the eighth time point t8, the processor 190 may determine the temperature prediction function as the second temperature prediction function because the previously predicted temperature (temperature predicted between the time points t6 and t7) is less than the second level. Thus, the processor 190 may output Low as the resolution control signal from the eighth time point t8 to the ninth time point t9. Thus, when the processor 190 acquires the sensing value of the second temperature sensor TH2, the sensing value may be applied to the second temperature prediction function, and the resultant predicted temperature may be between the first level and the second level.

At the ninth time point t9, the processor 190 may determine the temperature prediction function as the second temperature prediction function because the previously predicted temperature (temperature predicted between the time points t7 and t8) is less than the second level. Thus, the processor 190 may output Low as the resolution control signal from the ninth time point t9 to the tenth time point t10. Thus, when the processor 190 acquires the sensing value of the first temperature sensor TH1, the sensing value may be applied to the second temperature prediction function, and the resultant predicted temperature may be less than the second level.

At the tenth time point t10, the processor 190 may maintain the temperature prediction function as the previously determined second temperature prediction function because the previously predicted temperature (temperature predicted between the time points t8 and t9) is between the first level and the second level. Thus, the processor 190 may output Low as the resolution control signal from the tenth time point t10 to the eleventh time point t11. Thus, when the processor 190 acquires the sensing value of the second temperature sensor TH2, the sensing value may be applied to the second temperature prediction function, and the resultant predicted temperature may be greater than the first level.

As described above through the various examples, the cooking appliance 10 according to an embodiment of the present disclosure may alternately acquire the sensing values of the first temperature sensor TH1 and the second temperature sensor TH2 for each preset period and apply the acquired sensing value to the temperature prediction function determined according to the previously obtained temperature to read the sensing values of the plurality of temperature sensors through one A/D port, thereby sensing the temperatures over the wide range.

According to the embodiment of the present disclosure, when sensing the temperatures of multiple areas for the one heating zone, only the one A/D port may be used as the existing method, and thus, the number of temperature sensors may not be limited, and the increase in cost may be minimized.

According to the embodiment of the present disclosure, the temperature prediction range may be changed to predict the temperatures according to the sensing values of the temperature sensors, and thus, there may be the advantage of being able to predict the wide range of temperatures.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical scope of the present disclosure but to illustrate the technical idea of the present disclosure, and the technical scope of the present disclosure is not limited by these embodiments.

## Claims

1. A cooking appliance comprising:
a first temperature sensor (TH1);
a second temperature sensor (TH2);
an analog switch, AS, configured to acquire one of a sensing value of the first temperature sensor (TH1) and a sensing value of the second temperature sensor (TH2); and
a processor (190) configured to predict a temperature by applying the sensing value acquired through the analog switch, AS, to a temperature prediction function.

2. The cooking appliance according to claim 1, wherein the processor (190) is configured to determine the temperature prediction function based on a previously predicted temperature.

3. The cooking appliance according to claim 2, wherein the processor (190) is configured to:
determine the temperature prediction function to which the sensing value of the first temperature sensor (TH1) is to be applied based on the temperature previously predicted by the first temperature sensor (TH1).

4. The cooking appliance according to claim 4, wherein the processor (190) is configured to:
determine the temperature prediction function to which the sensing value of the second temperature sensor (TH2) is to be applied based on the temperature previously predicted by the second temperature sensor (TH2).

5. The cooking appliance according to claim 2, 3, or 4, wherein the processor (190) is configured to:
determine the temperature prediction function as a first temperature prediction function when the previously predicted temperature is greater than a preset first level.

6. The cooking appliance according to claim 5, wherein the processor (190) is configured to:
determine the temperature prediction function as a second temperature prediction function when the previously predicted temperature is less than a preset second level.

7. The cooking appliance according to claim 5 or 6, wherein the preset first level and the preset second level are the same.

8. The cooking appliance according to claim 5 or 6, wherein, when the preset first level and the preset second level are different from each other, the processor (190) is configured to maintain the previously determined temperature prediction function when the previously predicted temperature is between the preset first level and the preset second level.

9. The cooking appliance according to any one of claims 1 to 8, wherein the processor (190) is configured to control the analog switch, AS, so as to alternatively acquire the sensing value of the first temperature sensor (TH1) and the sensing value of the second temperature sensor (TH2) for each preset period.

10. The cooking appliance according to any one of claims 1 to 9, wherein the first temperature sensor (TH1) comprises a main temperature sensor (170).

11. The cooking appliance according to any one of claims 1 to 10, wherein the second temperature sensor (TH2) comprises a sub temperature sensor (180).

12. A method for operating a cooking appliance, the method comprising:
acquiring one of a sensing value of a first temperature sensor (TH1) and a sensing value of a second temperature sensor (TH2);
determining each of a temperature prediction function, to which the sensing value of the first temperature sensor (TH1) is applied, and a temperature prediction function, to which the sensing value of the second temperature sensor (TH2) is applied; and
applying the acquired sensing value to the determined temperature prediction function to predict a temperature.
